(19) Europäisches Patentamt
European Patent Office
Office européen des brevets

(11) **EP 1 914 644 A1**

(12) **DEMANDE DE BREVET EUROPEEN**

(43) Date de publication:
**23.04.2008 Bulletin 2008/17**

(51) Int Cl.:
**G06F 17/30** *(2006.01)*

(21) Numéro de dépôt: **07118717.3**

(22) Date de dépôt: **17.10.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **19.10.2006 FR 0654386**

(71) Demandeur: **FRANCE TELECOM**
**75015 Paris (FR)**

(72) Inventeurs:
- **Delteil, Alexandre**
  **92190 Meudon (FR)**
- **Maala, Mohamed Zied**
  **93200 Saint Denis (FR)**

(54) **Procédé d'ordonnancement de ressources d'unde base de ressources par rapport à une requete utilisateur**

(57) L'invention concerne un procédé d'ordonnancement de ressources d'une base de ressources par rapport à une requête utilisateur, lesdites ressources étant regroupées en concepts d'un ensemble de concepts utilisant un langage expressif tel qu'une logique de description, et ladite requête correspondant à un concept dudit ensemble, ledit procédé utilisant une mesure de distance entre deux concepts, l'un desdits deux concepts correspondant à l'une desdites ressources et l'autre desdits deux concepts correspondant à ladite requête, ladite mesure de distance comportant une étape de détermination (E1) du concept subsumant le plus spécifique (LCS) desdits deux concepts, ou du concept subsumé le plus général (MGS) desdits deux concepts,
caractérisé en ce que ladite mesure de distance comporte en outre une étape de détermination (E2) de concepts intermédiaires entre lesdits deux concepts et ledit concept subsumant le plus spécifique (LCS), ou entre lesdits deux concepts et ledit concept subsumé le plus général (MGS), à partir de constructeurs logiques dudit langage expressif.

a , b

Détermination du concept LCS
ou du concept MGS — E1

LCS , MGS

Détermination des concepts
intermédiaires — E2

Calcul d'une distance — E3

Fig. 2

EP 1 914 644 A1

**Description**

La présente invention se situe dans les domaines de l'informatique et de l'intelligence artificielle. Plus précisément, l'invention concerne la mesure de distance entre deux concepts appartenant à un même ensemble de concepts.

Dans la présente invention, les ensembles auxquels appartiennent les concepts sur lesquels on mesure des distances utilisent des langages expressifs du type logique de description. Une logique de description est un formalisme de représentation des connaissances permettant de décrire ou d'annoter des instances, comme par exemple une base de documents vidéo, ou une base de connaissances médicales dans un tout autre domaine. Ce formalisme permet ainsi de:

- déclarer une instance,
- déclarer qu'une instance appartient à une certaine classe, appelée "concept",
- déclarer quelles sont les relations, appelées "rôles", qui existent entre les instances,
- déclarer quelles sont les valeurs de certaines propriétés, par exemple le fait que la valeur associée à une relation est un entier, un réel ou une chaîne de caractère,
- définir des concepts à partir d'autres concepts, de relations, d'instances et de constructeurs logiques propres à la logique de description.

Un concept complexe défini à partir d'autres concepts est aussi appelé "description de concept". Dans la suite, sauf définition explicite, le terme "concept" est utilisé aussi bien pour désigner un concept complexe qu'un concept de base, dit aussi concept "primitif".

La mesure de distance entre concepts est exploitée dans de nombreuses applications, dans les domaines de l'analyse de données, du Web sémantique et de la classification de ressources multimédia, qui sont des images, des vidéos, des documents audio ou des documents de texte par exemple.

Notamment la notion de distance entre deux concepts, matérialisée par une mesure de distance, ou la notion de proximité entre deux concepts, matérialisée par une mesure de similarité, permettent l'une comme l'autre indifféremment, d'ordonner les ressources d'une base de ressources par rapport à leur adéquation avec une requête utilisateur. Cette requête est en effet très souvent exprimée sous forme d'une description de concept utilisant des mots clefs, lesquels sont des concepts dont les instances sont des ressources de la base de ressources, et des constructeurs logiques liant ces concepts.

Les relations entre concepts, qui naissent de la présence de constructeurs logiques ou de relations prédéfinies, donnent une dimension sémantique à ces mesures de distance ou de similarité entre concepts. Ainsi l'invention est utilisable dans les moteurs de recherches sur Internet, sur des sites de vente en ligne, sur des logiciels d'aide en ligne ou de gestion de bases de solutions, mais aussi sur des logiciels de relation clients et sur des portails d'informations.

De même les notions de distance ou de proximité entre concepts sont utilisées pour classifier et regrouper automatiquement les ressources d'une base de ressources. La classification vise à ranger une nouvelle ressource dans des classes définies a priori et dans lesquelles certaines ressources sont déjà classées. L'objectif est ainsi de ranger une nouvelle ressource dans la classe contenant les ressources qui lui sont le plus similaires. Quant au regroupement de ressources, il vise à créer des groupes de ressources tels que les ressources similaires soient classées dans un même groupe. Il permet également de créer une hiérarchie de groupes, et ainsi de classifier les ressources les plus similaires dans des groupes aux plus bas niveaux, tandis que les ressources les moins similaires sont classées dans des groupes aux plus hauts niveaux.

Il est à noter que la nature des ressources ordonnées, classées ou regroupées, que ces ressources soient des images ou des vidéos, est indifférente à partir du moment où les annotations de ces ressources sont faites avec un même langage expressif.

De plus, si l'invention s'attache à mesurer une distance entre concepts, à la mesure de distance selon l'invention correspond naturellement une mesure de similarité, qui est l'inverse de la distance mesurée selon l'invention.

Les techniques antérieures de mesure entre concepts concernent davantage des mesures de similarité que des mesures de distance. On distingue quatre catégories de mesures de similarité existantes selon les informations utilisées pour évaluer ces mesures:

- Dans une première catégorie, la mesure de similarité entre deux concepts consiste à déterminer le chemin le plus court entre ces deux concepts, c'est-à-dire par exemple le nombre d'arcs minimal qui les sépare dans une structure hiérarchique prédéfinie. Une telle mesure est décrite par exemple dans l'article de Z. Wu et M. Palmer, intitulé "Verb Semantics and Lexical Selection", publié à l'occasion d'une conférence ACL, d'après l'anglais "Associations for Computational Linguistics", en 1994. Cette mesure nécessite que les concepts dont on mesure les similarités soient organisés au sein d'une hiérarchie prédéfinie, par exemple dans un arbre ou un graphe de concepts.
- Dans une seconde catégorie, on utilise le contenu informationnel des concepts afin d'évaluer une mesure de similarité entre deux concepts. Ainsi dans l'article de P. Resnik, intitulé "Using information content to evaluate semantic similarity in a taxonomy", publié à l'occasion d'une conférence IJCAI, d'après l'anglais "International Joint Conference for Artificial Intelligence", à Montréal en 1995, on utilise des données de probabilité associées aux concepts d'un même ensemble de concepts. Cette catégorie nécessite donc l'obtention d'informations spécifiques à chacun des concepts de l'ensemble auquel on s'intéresse. Par exemple la mesure de similarité définie par P. Resnik nécessite l'existence d'un modèle de probabilité applicable à cet ensemble, ou l'existence d'une base d'instances permettant d'obtenir des informations statistiques pour chacun des concepts de l'ensemble.

- Dans une troisième catégorie, on utilise les caractéristiques communes et discriminantes entre concepts, pour évaluer une mesure de similarité entre deux concepts. Une telle mesure est définie dans l'article de A. Tversky, intitulé "Features of similarity", et publié en 1977 dans le magazine "Psychological Review". Cependant cette définition est abstraite et ne précise pas comment obtenir, dans un contexte applicatif précis ou dans un langage particulier, les caractéristiques communes et discriminantes de deux concepts.

- Enfin dans une quatrième catégorie, la mesure de similarité entre deux concepts utilise la notion d'extension de concept, c'est-à-dire le nombre d'instances d'un concept dans une base de ressources décrite à l'aide d'une logique de description. Un exemple d'une telle mesure est décrit dans l'article de C. d'Amato, N. Fanizzi et F. Esposito, intitulé "A Semantic Similarity Measure for Expressive Description Logics", et publié à l'occasion de la conférence CILC, d'après l'italien "Convegno Italiano di Logica Computazionale", de 2005. Cette catégorie nécessite donc une base d'instances décrites dans une logique de description, la similarité entre deux concepts étant évaluée à partir du nombre d'instances appartenant à ces concepts.

Les mesures de similarité existantes nécessitent donc toutes, pour calculer une valeur de distance entre deux concepts, des informations supplémentaires à l'ensemble de concepts auquel ils appartiennent, telles qu'une hiérarchie prédéfinie de concepts, un modèle de probabilité ou une base d'instances de concepts. De plus, les trois premières catégories de mesures de similarité ne sont pas utilisables sur des ensembles de concepts utilisant un langage expressif, car l'existence de constructeurs logiques augmente artificiellement ces ensembles d'un nombre important de concepts pour lesquels aucune information supplémentaire n'est disponible.

La présente invention a pour but de résoudre les inconvénients de la technique antérieure en fournissant un procédé et un dispositif d'ordonnancement de ressources qui utilisent une mesure de distance selon l'invention entre deux concepts, qu'ils soient des concepts complexes ou des concepts de base, ces deux concepts appartenant à un ensemble prédéfini de concepts formalisant une représentation des connaissances. Ce formalisme est par exemple une logique de description, un graphe conceptuel, une logique modale ou un langage relationnel.

A cette fin, l'invention propose un procédé d'ordonnancement de ressources d'une base de ressources par rapport à une requête utilisateur, lesdites ressources étant regroupées en concepts d'un ensemble de concepts utilisant un langage expressif tel qu'une logique de description, et ladite requête correspondant à un concept dudit ensemble, ledit procédé utilisant une mesure de distance entre deux concepts, l'un desdits deux concepts correspondant à l'une desdites ressources et l'autre desdits deux concepts correspondant à ladite requête, ladite mesure de distance comportant une étape de détermination du concept subsumant le plus spécifique desdits deux concepts, ou du concept subsumé le plus général desdits deux concepts, caractérisé en ce que ladite mesure de distance comporte en outre une étape de détermination de concepts intermédiaires entre lesdits deux concepts et ledit concept subsumant le plus spécifique, ou entre lesdits deux concepts et ledit concept subsumé le plus général, à partir de constructeurs logiques dudit langage expressif.

Ce procédé a l'avantage de ne pas nécessiter l'existence d'une hiérarchie prédéfinie entre concepts pour mesurer une distance entre concepts, ni de nécessiter des informations supplémentaires sur les concepts d'un même ensemble de concepts. En effet le procédé selon l'invention utilise les constructeurs logiques du langage expressif de l'ensemble de concepts considéré, pour construire des morceaux de graphe hiérarchique qui englobent les deux concepts entre lesquels on mesure une distance. Ces morceaux sont formés de concepts intermédiaires construits à partir de concepts de cet ensemble, c'est-à-dire de descriptions de concepts, et éventuellement de morceaux d'une hiérarchie prédéfinie de concepts, si une telle hiérarchie préexiste dans l'ensemble de concepts. Les morceaux de graphe ainsi construits permettent ensuite de mesurer une distance entre ces deux concepts.

Selon une caractéristique préférée, lorsque ledit ensemble ne comporte pas de hiérarchie prédéfinie entre concepts, ladite mesure de distance selon l'invention comporte une étape supplémentaire de calcul d'une distance entre lesdits deux concepts par l'une ou l'autre formule:

$$d(b, c1) = n\_arc(b, LCS) + n\_arc(c1, LCS)$$

ou

$$d'(b,c1) = n\_arc(b, MGS) + n\_arc(c1, MGS)$$

où

- d(b,c1) et d'(b,c1) désignent des distances entre deux concepts b et c1,
- LCS désigne le concept subsumant le plus spécifique des concepts b et c1,
- MGS désigne le concept subsumé le plus général des concepts b et c1,
- $n\_arc(x, y))$ est une fonction affine croissante du nombre de concepts intermédiaires déterminés précédemment sur une chaîne de concepts entre deux concepts x et y, les relations entre les concepts de ladite chaîne étant des relations de subsomption.

Ce mode de calcul de la distance entre concepts a l'avantage de fournir une distance mathématique, c'est-à-dire vérifiant:

- l'axiome de la séparation, selon la proposition:

$$\text{si } x \neq y \text{ alors } d(x,y) > 0$$

- l'axiome de la symétrie, selon la proposition:

$$d(x,y) = d(y,x)$$

- l'axiome de l'inégalité triangulaire, selon la proposition:

$$d(x,y) \leqslant d(x,z) + d(z,y)$$

où d(x,y), d(x,z) et d(z,y) désignent des distances calculées selon l'invention respectivement entre deux concepts x et y, entre deux concepts x et z et entre deux concepts z et y. Ainsi le procédé selon l'invention rend des résultats cohérents du point de vue logique, ce qui est essentiel pour son utilisation par un moteur de recherche par exemple.

De plus ce mode de calcul permet de classer des concepts de manière rigoureuse. Notamment une application d'ordonnancement de ressources utilisant le procédé selon l'invention vérifiera des propriétés sémantiques: elle attribuera une même valeur à des ressources ayant les mêmes caractéristiques par rapport à la demande d'un utilisateur et elle ordonnera les résultats selon leurs proximités avec la demande, du plus proche au moins proche.

Selon une autre caractéristique préférée, lorsque ledit ensemble comporte une hiérarchie prédéfinie de concepts, ladite mesure de distance selon l'invention comporte une étape supplémentaire de calcul d'une distance entre lesdits deux concepts par l'une ou l'autre formule:

$$d(b,c1) = min(n\_arc(b, LCS)) + min(n\_arc(c1, LCS))$$

ou

$$d'(b,c1) = min(n\_arc(b, MGS)) + min(n\_arc(c1, MGS))$$

où

- d(b,c1) et d'(b,c1) désignent des distances entre deux concepts b et c1

- LCS désigne le concept subsumant le plus spécifique des concepts b et c1,
- MGS désigne le concept subsumé le plus général des concepts b et c1,
- $min(n\_arc(x, y))$ est une fonction affine croissante du nombre de concepts intermédiaires déterminés précédemment sur la plus courte chaîne de concepts entre deux concepts x et y, ladite chaîne faisant partie d'un treillis de concepts dont les barres lient entre eux des concepts par des relations de subsomption.

Ce mode de calcul est adapté au cas où une hiérarchie prédéfinie existe déjà dans l'ensemble de concepts, et permet comme le mode de calcul précédent de classer des concepts de manière rigoureuse.

Selon une autre caractéristique préférée, l'étape de détermination de concepts intermédiaires entre lesdits deux concepts et ledit concept subsumant le plus spécifique comprend les étapes de:

- calcul des concepts généralisants d'un desdits deux concepts
- et calcul des conjonctions desdits concepts généralisants avec ledit concept subsumant le plus spécifique.

Cette façon de construire les concepts intermédiaires permet d'automatiser l'étape de détermination de concepts intermédiaires, et par conséquent la mesure de distance selon l'invention dans un ensemble de concepts, lorsqu'on choisit l'option de mesure de distance utilisant la notion de concept subsumant le plus spécifique.

Selon une autre caractéristique préférée, l'étape de détermination de concepts intermédiaires entre lesdits deux concepts et ledit concept subsumé le plus général comprend les étapes de:

- calcul des concepts généralisants d'un desdits deux concepts
- et calcul des conjonctions desdits concepts généralisants avec l'autre desdits deux concepts.

Cette construction des concepts intermédiaires entre l'un des deux concepts et leur concept subsumé le plus général permet également d'automatiser la mesure de distance selon l'invention, lorsqu'on choisit l'option de calcul de distance utilisant la notion de concept subsumé le plus général.

L'invention concerne aussi un moteur de recherche comportant une base de ressources, lesdites ressources étant regroupées en concepts d'un ensemble de concepts utilisant un langage expressif tel qu'une logique de description, ledit moteur étant adapté pour interroger ladite base de ressources à partir d'une requête utilisateur correspondant à un concept dudit ensemble, et ledit moteur utilisant la mesure de distance selon l'invention.

L'invention concerne en outre un système d'ordonnancement de ressources par rapport à une requête utilisateur, utilisant la mesure de distance selon l'invention.

L'invention concerne enfin un programme d'ordinateur comportant des instructions pour mettre en oeuvre le procédé selon l'invention, lorsqu'il est exécuté sur un ordinateur.

Le moteur de recherche, le système d'ordonnancement ainsi que le programme d'ordinateur, présentent des avantages analogues à ceux du procédé selon l'invention.

D'autres caractéristiques et avantages apparaîtront à la lecture d'un mode de réalisation préféré décrit en référence aux figures dans lesquelles :

- la figure 1 représente un exemple de concepts d'un ensemble de concepts relatif à des films vidéo,
- la figure 2 représente différentes étapes de la mesure de distance selon l'invention,
- la figure 3 représente un algorithme de construction de concepts intermédiaires dans une première option de mesure de distance selon l'invention,
- la figure 4 représente une partie d'un treillis de concepts englobant deux concepts entre lesquels on mesure une distance selon l'invention,
- la figure 5 représente un algorithme de construction de concepts intermédiaires dans une deuxième option de mesure de distance selon l'invention,
- la figure 6 représente un système d'ordonnancement de ressources par rapport à une requête utilisateur,
- la figure 7 représente un système de classification de ressources,
- et la figure 8 représente un système de regroupement de ressources.

Selon un mode de réalisation préféré de l'invention, on mesure des distances entre concepts appartenant à un même ensemble de concepts qui utilise la logique de description "ALE", dont une présentation est donnée dans le livre de D. Nardi et R. J. Brachman intitulé " The Description Logic Handbook "et édité par Cambridge University Press. Ce mode de réalisation est cependant facilement adaptable pour mesurer des distances entre concepts d'ensembles de concepts utilisant d'autres langages.

La logique de description "ALE" est munie des constructeurs logiques suivants: "ET" représenté par le symbole logique n , "TEL_QUE_UN" représenté par le symbole logique ∃, "TELS_QUE_TOUS" représenté par le symbole logique ∀, et "NON", représenté par le symbole logique ⌐. Les constructeurs utilisés dans une logique de description particulière définissent la richesse et l'expressivité de celle-ci: une logique de description est d'autant plus expressive qu'elle utilise plus de constructeurs.

Les constructeurs du langage "ALE" permettent de construire des concepts complexes, ayant une sémantique précise tout en restant assez intuitive. De même ces constructeurs permettent de définir des relations complexes, formées de relations et de constructeurs.

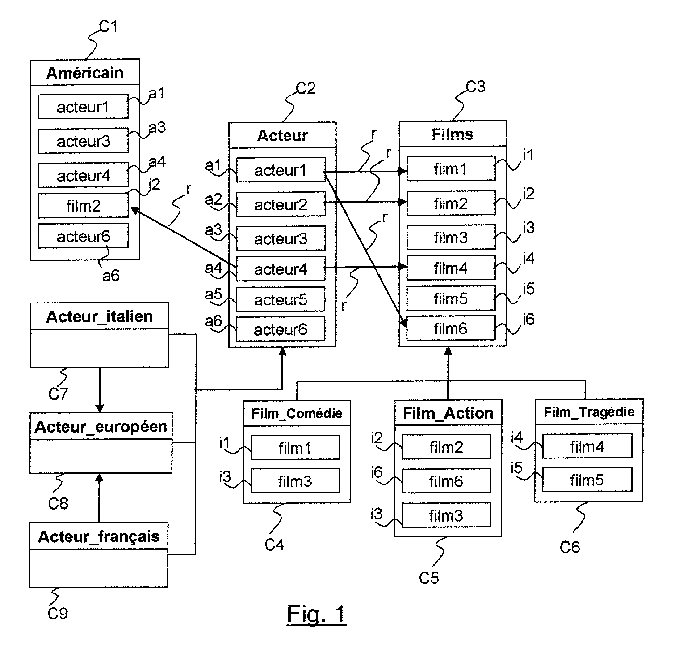

Ainsi dans l'exemple d'ensemble de concepts représenté à la **figure 1:**

- La relation r, signifiant "acteur de", relie les acteurs du concept C2 rassemblant tous les acteurs de cet ensemble de concepts, aux films dans lesquels ils ont joué. Par exemple l'instance a1 correspondant à l'acteur "acteur1" est lié par la relation r aux instances de film i1 et i6, ce qui signifie que cet acteur a joué dans les films correspondants "film1" et "film6".
- Le concept "C4 ET C5" décrit le concept rassemblant l'ensemble des instances appartenant à la fois à C4 et à C5, en l'occurrence ici l'instance i3 correspondant au film "film3" commun au concept C4 rassemblant les films de comédie et au concept C5 rassemblant les films d'action.
- Le concept "TEL_QUE_UN (r, C3)" décrit le concept rassemblant l'ensemble des instances reliées par au moins la relation r à une instance du concept C3 rassemblant tous les films de l'ensemble de concepts, c'est-à-dire qu'il décrit le concept formé des instances a1, a2 et a4 correspondant aux acteurs "acteur1", "acteur2" et "acteur4".
- Le concept "TELS_QUE_TOUS(r, C3)" décrit le concept rassemblant l'ensemble des instances telles que celles-ci sont liées par la relation r uniquement avec des instances appartenant au concept C3, c'est-à-dire le concept formé des instances a1 et a2, puisque l'instance a4 est reliée par la relation r au concept C3 mais aussi au concept C1 rassemblant les films et acteurs américains.
- Le concept "NON(C5)" décrit le concept rassemblant l'ensemble des instances n'appartenant pas au concept C5, c'est-à-dire le concept formé de l'instance i1 du concept C4 et des instances i4 et i5 du concept C6 .
- Le concept "ALL" dans le langage "ALE" décrit le concept qui rassemble l'ensemble des instances de l'ensemble de concepts, c'est-à-dire les instances a1, a2, a3, a4, a5, a6 et i1, i2, i3, i4, i5, i6.

De plus le langage "ALE", comme toutes les logiques de description, est muni d'une relation d'ordre qui permet d'organiser les concepts d'un même ensemble dans une hiérarchie. Cette relation d'ordre est la relation de subsomption: un premier concept est dit subsumé par un deuxième concept, ou encore le premier concept est plus spécifique ou moins général que le deuxième concept, si toutes les instances du premier concept sont aussi des instances du deuxième concept.

Par exemple dans la **figure 1**, le concept C5 rassemblant les films d'action, le concept C4 rassemblant les films de comédie et le concept C6 rassemblant les films de tragédie sont subsumés par le concept C3 rassemblant tous les films de l'ensemble de concepts: ceci se traduit par "tout film d'action, de comédie ou de tragédie est un film". De même le concept C7 rassemblant les acteurs italiens, et le concept C9 rassemblant les acteurs français, sont subsumés par le concept C8 rassemblant les acteurs européens, lui-même subsumé par le concept C2 rassemblant tous les acteurs de l'ensemble de concepts. Ces relations préexistantes forment une hiérarchie prédéfinie entre les concepts de l'ensemble de concepts représenté à la **figure 1**, qui sont des concepts de base. Lorsqu'il n'existe pas de hiérarchie prédéfinie dans un ensemble de concepts, les seules relations entre concepts sont celles qui naissent de la construction de concepts complexes.

Cette relation de subsomption est représentée par le symbole logique ⊑. Ainsi "le concept C5 est subsumé par le concept C3" s'écrit:

$$C5 \sqsubseteq C3$$

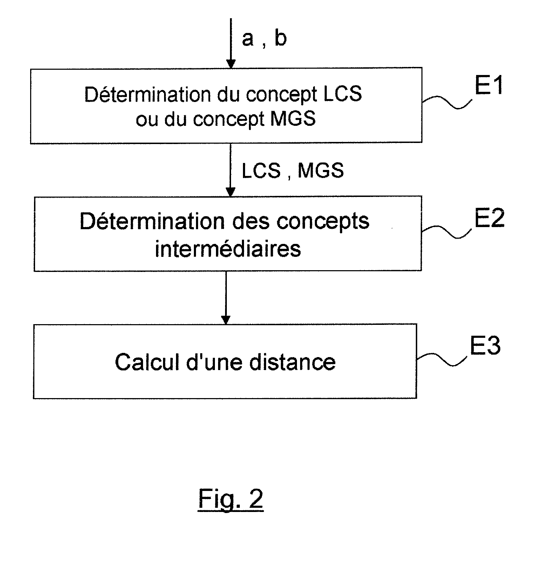

En référence à la **figure 2**, la mesure de distance entre deux concepts a et b selon l'invention se déroule en trois étapes E1 à E3. Ces étapes sont typiquement implémentées dans un programme d'ordinateur. Elles sont par exemple implémentées dans des moteurs d'inférence tels que "RACER", "FACT" ou "PELLET", conçus pour raisonner sur des logiques de description.

La première étape E1 est la détermination du concept LCS subsumant le plus spécifique des deux concepts a et b, ou bien la détermination du concept MGS subsumé le plus général des deux concepts a et b, les concepts LCS et MGS pouvant être indifféremment utilisés pour mesurer une distance entre les concepts a et b. Ces deux options du procédé selon l'invention sont présentées l'une après l'autre ci-après.

Suivant la première option du procédé selon l'invention, on détermine le concept subsumant le plus spécifique des deux concepts a et b. La définition du concept subsumant le plus spécifique de deux concepts, en l'occurrence ici des concepts a et b, est la suivante: le concept LCS est dit concept subsumant le plus spécifique des concepts a et b si et seulement si

a $\sqsubseteq$ LCS, b $\sqsubseteq$ LCS et il n'existe pas un concept x tel que

$$x \sqsubseteq LCS,\ a \sqsubseteq x\ et\ b \sqsubseteq x.$$

La détermination du concept LCS est effectuée en utilisant la formule suivante, donnée par F. Baader, B. Sertkaya et A.Y.Turhan dans leur article "Computing the Least Common Subsumer w.r.t. a Background Terminology", publié à l'occasion de l'atelier international "Description Logics" de 2004:

$$lcs_{ALE}(a,b) = \prod_{A \in names(a) \cap names(b)} A \quad \sqcap \quad \prod_{\neg B \in names(a) \cap names(b)} \neg B \quad \sqcap$$

$$\prod_{r \in roles^{\exists}(a) \cap roles^{\exists}(b)} \left( \prod_{E \in restrict_r^{\exists}(a) \cap F \in restrict_r^{\exists}(b)} \exists r, lcs_{ALE}(E,F) \right) \sqcap$$

$$\prod_{r \in roles^{\forall}(a) \cap roles^{\forall}(b)} \left( \prod_{E \in restrict_r^{\forall}(a) \cap F \in restrict_r^{\forall}(b)} \exists r, lcs_{ALE}(E,F) \right)$$

où

- *lcs_{ALE} (a,b)* est le concept subsumant le plus spécifique des deux concepts a et b,
- *names(x)* correspond à l'ensemble des noms de concepts qui apparaissent dans la description d'un concept x,
- *names*(x) correspond à l'ensemble des noms de concepts qui apparaissent sous forme négative dans la description d'un concept x,
- *roles^{∃}(x)* correspond aux noms de relations qui apparaissent dans les constructeurs "TEL_QUE_UN" dans la description d'un concept x,
- *roles^{∀}(x)* correspond aux noms de relations qui apparaissent dans les constructeurs "TEL_QUE_TOUS" dans la description d'un concept x,
- $restrict_r^{\exists}(x)$ représente l'ensemble des concepts apparaissant dans les constructeurs "TEL_QUE_UN" et avec la relation r, dans la description d'un concept x.
- et $restrict_r^{\forall}(x)$ représente l'ensemble des concepts apparaissant dans les constructeurs "TEL_QUE_TOUS" et avec la relation r, dans la description d'un concept x.

Le concept subsumant le plus spécifique des deux concepts a et b est donc par cette formule défini récursivement comme étant formé de la conjonction:

- des concepts qui apparaissent à la fois dans la conjonction décrivant le concept a et dans la conjonction décrivant le concept b,

- des concepts de la forme "TEL_QUE_UN (r, lcs (E,F))", où le concept "TEL_QUE_UN (r, E)" apparaît dans la conjonction décrivant le concept a et le concept "TEL_QUE_UN (r, F)" apparaît dans la conjonction décrivant le concept b,
- et des concepts de la forme "TEL_QUE_TOUS(r, lcs (E,F))", où le concept "TEL_QUE_TOUS (r, E)" apparaît dans la conjonction décrivant le concept a et le concept "TEL_QUE_TOUS (r, F)" apparaît dans la conjonction décrivant le concept b.

Il est à noter que même si une hiérarchie prédéfinie existe dans l'ensemble de concepts auquel appartiennent les concepts a et b, le concept LCS reste le concept déterminé par la formule ci-dessus.

En variante, si l'ensemble de concepts utilise une logique de description contenant le constructeur "OU", on détermine le concept LCS par le concept "a OU b" décrivant l'ensemble des ressources appartenant soit au concept a soit au concept b, qu'une hiérarchie prédéfinie existe ou non dans cet ensemble de concepts.

Suivant la deuxième option du procédé selon l'invention, on détermine le concept subsumé le plus général MGS des deux concepts a et b. La définition du concept subsumé le plus général de deux concepts, en l'occurrence ici des concepts a et b, est la suivante: le concept MGS est dit concept subsumé le plus général des concepts a et b si et seulement si

MGS $\sqsubseteq$ a, MGS $\sqsubseteq$ b et il n'existe pas un concept x tel que

$$MGS \sqsubseteq x, x \sqsubseteq a \text{ et } x \sqsubseteq b.$$

Dans les logiques de description, le concept subsumé le plus général de deux concepts a et b est facile à déterminer et il correspond au concept "a ET b". Il est à noter que même si une hiérarchie prédéfinie existe dans l'ensemble de concepts utilisant cette logique de description, le concept subsumé le plus général reste le concept "a ET b".

L'étape suivante E2 est la détermination de concepts intermédiaires entre les concepts a et b et le concept LCS, ou bien entre les concepts a et b et le concept MGS, suivant l'option du procédé selon l'invention que l'on souhaite utiliser pour calculer une distance entre les concepts a et b.

Ces concepts intermédiaires appartiennent à un treillis complet de concepts. Ce treillis est constitué des concepts de base, et de tous les concepts complexes possibles formés à partir de ces concepts de base, des constructeurs et relations de l'ensemble de concepts. A ce treillis est associée une relation d'ordre qui est la relation de subsomption. De plus il est complet, ce qui signifie que chaque couple de concepts de ce treillis a un concept subsumant le plus spécifique, et un concept subsumé le plus général.

Plus précisément dans cette étape E2, on construit deux chaînes de concepts dans ce treillis complet, qui permettent de passer respectivement du concept a au concept LCS et du concept b au concept LCS, ou bien qui permettent de passer respectivement du concept a au concept MGS et du concept b au concept MGS. Ces deux constructions correspondant aux deux options du procédé selon l'invention sont présentées l'une après l'autre ci-après.

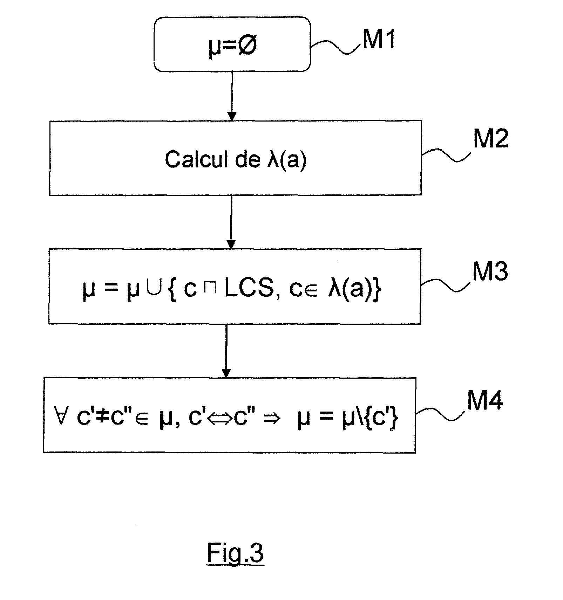

Suivant la première option du procédé selon l'invention, la construction de l'ensemble des concepts intermédiaires entre le concept a et le concept LCS à l'étape E2 est réalisée de manière automatique par l'algorithme représenté à la **figure 3**, comportant quatre étapes M1 à M4. La construction de l'ensemble des concepts intermédiaires entre le concept b et le concept LCS utilise de manière symétrique le même algorithme. Cet algorithme utilise une propriété des concepts intermédiaires entre les concepts a et b et le concept LCS qui est la suivante:

- Les concepts intermédiaires entre le concept a et le concept LCS sont de la forme" LCS ET c", où c est un concept tel que a $\sqsubseteq$ c,
- et les concepts intermédiaires entre le concept b et le concept LCS sont de la forme" LCS ET c", où c est un concept tel que b $\sqsubseteq$ c.

Cette propriété permet de construire les concepts intermédiaires entre le concept a et le concept LCS, ainsi qu'entre le concept b et le concept LCS, en utilisant la notion de concept généralisant: un concept généralise un autre concept s'il subsume celui-ci.

Dans une première étape M1, on initialise l'ensemble $\mu$ des concepts intermédiaires entre le concept a et le concept LCS comme étant l'ensemble vide.

Dans une seconde étape M2, on calcule l'ensemble des concepts généralisants $\lambda(a)$ du concept a. Ce calcul se fait dans le langage "ALE" de la façon suivante:

- Si le concept a est un concept primitif, l'ensemble des concepts généralisants $\lambda(a)$ du concept a contient lui-même et le concept "ALL",

- si le concept a est de la forme "x ET y", où x et y sont des concepts, l'ensemble des concepts généralisants λ(a) du concept a contient les concepts de la forme "u ET v", où u est un concept de l'ensemble des concepts généralisants du concept x, et v est un concept de l'ensemble des concepts généralisants du concept y,
- si le concept a est de la forme "TEL_QUE_UN (r, x)", où r est une relation et x un concept, l'ensemble des concepts généralisants λ(a) du concept a contient les concepts de la forme "TEL_QUE_UN (r, y)" où y est un concept de l'ensemble des concepts généralisants du concept x,
- si le concept a est de la forme "TEL_QUE_TOUS (r, x)", où r est une relation et x un concept, l'ensemble des concepts généralisants λ(a) du concept a contient les concepts de la forme "TEL_QUE_TOUS (r, y)" où y est un concept de l'ensemble des concepts généralisants du concept x.

Dans une troisième étape M3, on ajoute à l'ensemble μ des concepts intermédiaires entre le concept a et le concept LCS, pour chaque concept c du concept λ(a), le concept "c ET LCS".

Enfin dans une dernière étape M4, on supprime les doublons de l'ensemble μ des concepts intermédiaires ainsi construit. Ainsi pour tous concepts c' et c" appartenant à l'ensemble μ, si le concept c'est équivalent au concept c", on supprime le concept c' de cet ensemble μ. Dans cette étape M4, on supprime également les concepts équivalents au concept LCS et au concept a, afin de ne garder que des concepts intermédiaires.

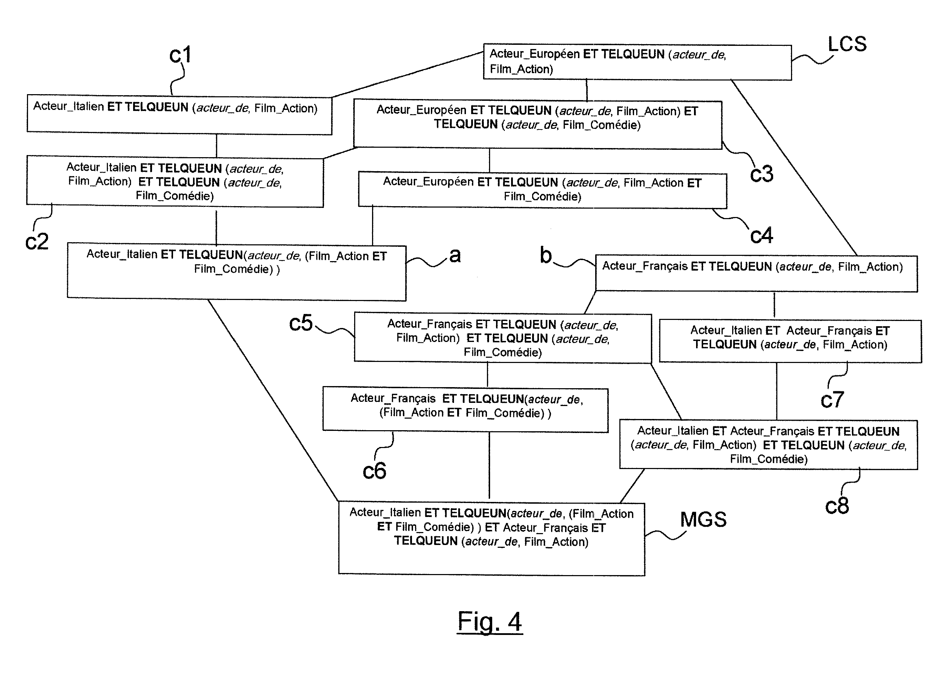

Ainsi dans l'exemple de la **figure 4**, le concept a qui rassemble l'ensemble des acteurs italiens ayant joué dans des films d'action qui sont aussi des films de comédie, ce qui s'écrit encore "C7 **ET TELQUEUN**($r$, (C4 **ET** C5))", a pour concept généralisant

$$\lambda(a)= \lambda \text{ (C7 ET TELQUEUN}(r, \text{(C4 ET C5) ))}$$

$$= \{x \text{ ET } y, x \in \lambda \text{ (C7)}, y \in \lambda \text{ (TELQUEUN}(r, \text{(C4 ET C5) ))}\}$$

$$= \{x \text{ ET } y, x \in \{C7, ALL\}, y \in \{\text{TELQUEUN}(r, u), u \in \lambda \text{ (C4 ET C5)}\}\}$$

$$= \{x \text{ ET } y, x \in \{C7, ALL\}, y \in \{\text{TELQUEUN}(r, u), u \in \{v \text{ ET } w, v \in \lambda \text{ (C4)}, w \in \lambda \text{ (C5)}\}\}\}$$

$$= \{x \text{ ET } y, x \in \{C7, ALL\}, y \in \{\text{TELQUEUN}(r, u), u \in \{v \text{ ET } w, v \in \{C4, ALL\}, w \in \lambda \{C5, ALL\}\}\}\}$$

$$= \{x \text{ ET } y, x \in \{C7, ALL\}, y \in \{\text{TELQUEUN}(r, u), u \in \{ALL, C4 \text{ ET } C5, C4, C5\}\}\}$$

$$= \{ALL, \text{TELQUEUN}(r, C4 \text{ ET } C5), \text{TELQUEUN}(r, C4), \text{TELQUEUN}(r, C5), C7,$$
$$C7 \text{ ET TELQUEUN}(r, C4 \text{ ET } C5), C7 \text{ ET TELQUEUN}(r, C4), C7 \text{ ET}$$
$$\text{TELQUEUN}(r, C5)\}$$

où

- λ est l'opérateur généralisant un concept,
- et x, y, u, v, w sont des concepts.

Le concept LCS étant l'ensemble des acteurs européens ayant joué dans des films d'action, ce qui s'écrit encore "C8 ET TELQUEUN(r,C5)", l'ensemble des concepts intermédiaires entre le concept a et le concept LCS est le suivant:

{C8 **ET TELQUEUN**(r,C5) **ET** c, c∈ λ(a)} ={C8 **ET TELQUEUN**(r,C5), C8 **ET TELQUEUN**(r,C4 **ET** C5), C8 **ET TELQUEUN**(r,C5) **ET TELQUEUN**(r,C4), C8 **ET TELQUEUN**(r,C5), C7 **ET TELQUEUN**(r,C5), C7 **ET TELQUEUN**(r, C4 ET C5), C7 **ET TELQUEUN**(r,C5) **ET TELQUEUN**(r, C4), C7 **ET TELQUEUN**(r, C5)} ={LCS, c4, c3, LCS, c1, a, c2, c1}

Il est à noter que le calcul ci-dessus utilise implicitement l'équivalence "C7 ET C8 <=> C7" due à la relation de

subsumption prédéfinie:

$$C7 \sqsubseteq C8$$

En supprimant les concepts équivalents au concept LCS et au concept a dans l'ensemble de concepts intermédiaires ci-dessus, on trouve quatre concepts intermédiaires c1, c2, c3 et c4 qui sont les suivants:

- Le concept c1 est l'ensemble des acteurs italiens ayant joué dans un film d'action,
- le concept c2 est l'ensemble des acteurs italiens ayant joué dans un film d'action et ayant joué dans un film de comédie,
- le concept c3 est l'ensemble des acteurs européens ayant joué dans un film d'action et ayant joué dans un film de comédie,
- et le concept c4 est l'ensemble des acteurs européens ayant joué dans des films d'action qui sont aussi des films de comédie.

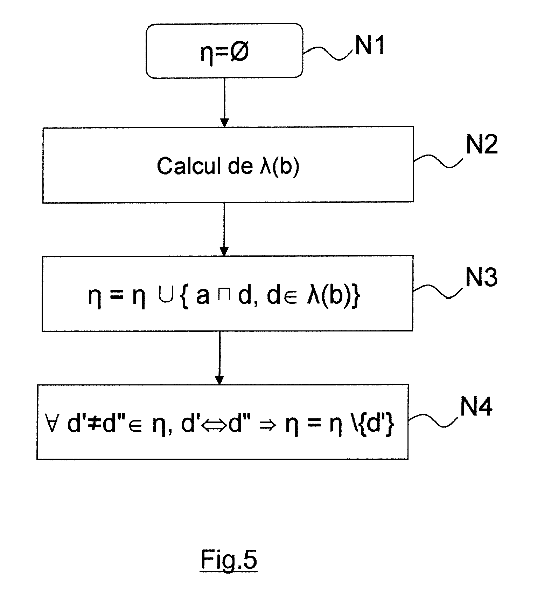

En appliquant la même méthode pour déterminer les concepts intermédiaires entre le concept b et le concept LCS, on trouve qu'il n'y a pas de concepts intermédiaires entre le concept b et le concept LCS.
Suivant la deuxième option du procédé selon l'invention, la construction de l'ensemble des concepts intermédiaires entre le concept a et le concept MGS à l'étape E2 est réalisée de manière automatique par l'algorithme représenté à la **figure 5**, comportant quatre étapes N1 à N4. La construction de l'ensemble des concepts intermédiaires entre le concept b et le concept MGS utilise de manière symétrique le même algorithme. Cet algorithme utilise une propriété des concepts intermédiaires entre les concepts a et b et le concept MGS qui est la suivante:

- Les concepts intermédiaires entre le concept a et le concept MGS sont de la forme" a ET d", où d est un concept tel que $b \sqsubseteq d$,
- et les concepts intermédiaires entre le concept b et le concept MGS sont de la forme" b ET d", où d est un concept tel que $a \sqsubseteq d$.

Cette propriété permet de construire les concepts intermédiaires entre le concept a et le concept MGS, ainsi qu'entre le concept b et le concept MGS, en utilisant la notion de concept généralisant.
Dans une première étape N1, on initialise l'ensemble η des concepts intermédiaires entre le concept a et le concept MGS comme étant l'ensemble vide.
Dans une seconde étape N2, on calcule l'ensemble des concepts généralisants λ(b) du concept b.
Dans une troisième étape N3, on ajoute à l'ensemble η des concepts intermédiaires entre le concept a et le concept MGS, pour chaque concept d du concept λ(b), le concept "a ET d".
Enfin dans une dernière étape N4, on supprime les doublons de l'ensemble η des concepts intermédiaires ainsi construit. Ainsi pour tous concepts d' et d" appartenant à l'ensemble η, si le concept d' est équivalent au concept d", on supprime le concept d' de cet ensemble η. Dans cette étape N4, on supprime également les concepts équivalents au concept MGS et au concept a, afin de ne garder que des concepts intermédiaires.
Ainsi dans l'exemple de la **figure 4,** le concept b qui rassemble l'ensemble des acteurs français ayant joué dans un film d'action, ce qui s'écrit encore "C9 **ET TELQUEUN**($r$, C5)", a pour concept généralisant:

$$\lambda(b) = \lambda \, (C9 \; \textbf{ET TELQUEUN}(r, C5))$$

$$= \{x \; ET \; y, \; x \in \lambda \, (C9) , \; y \in \{\textbf{TELQUEUN}(r, u), u \in \lambda \, (C5)\}\}$$

$$= \{x \; ET \; y, \; x \in \{C9, ALL\}, \; y \in \{\textbf{TELQUEUN}(r, u), u \in \{C5, ALL\}\}\}$$

$$= \{C9 \; \textbf{ET TELQUEUN}(r, C5), \; C9, \; \textbf{TELQUEUN}(r, C5), \; ALL\}$$

où

- λ est l'opérateur généralisant un concept,
- et x, y, u sont des concepts.

Le concept a étant l'ensemble des acteurs italiens ayant joué dans des films d'action qui sont aussi des films de comédie, ce qui s'écrit encore "C7 **ET TELQUEUN**(r, C4 **ET** C5)", l'ensemble des concepts intermédiaires entre le concept a et le concept MGS est le suivant:

$$\{C7 \; \textbf{ET TELQUEUN}(r, \; C4 \; \textbf{ET} \; C5) \; \textbf{ET} \; d, \; d \in \lambda(b)\}$$

$$=\{ \; C7 \; \textbf{ET} \; C9 \; \textbf{ET} \; \textbf{TELQUEUN}(r, \; C4 \; \textbf{ET} \; C5), \; C7 \; \textbf{ET} \; C9 \; \textbf{ET}$$

$$\textbf{TELQUEUN}(r, \; C4 \; \textbf{ET} \; C5), \; C7 \; \textbf{ET} \; \textbf{TELQUEUN}(r, \; C4 \; \textbf{ET} \; C5), \; C7 \; \textbf{ET}$$

$$\textbf{TELQUEUN}(r, C4 \; \textbf{ET} \; C5)\}$$

$$=\{MGS, \; MGS, \; a, \; a\}$$

En effet le concept MGS, qui a été calculé à l'étape E1 comme étant le concept "a ET b", soit " C7 **ET TELQUEUN** (r, (C4 **ET** C5)) **ET** C9 **ET TELQUEUN**(r, C5)", correspond à l'ensemble des acteurs italiens qui sont aussi des acteurs français et qui ont joué dans des films d'action qui sont aussi des films de comédie. Le concept MGS est donc équivalent au concept "C7 **ET** C9 **ET TELQUEUN(r,** C4 **ET** C5)".

En supprimant les concepts équivalents au concept MGS et au concept a dans cet ensemble, on trouve qu'il n'y a pas de concepts intermédiaires entre le concept a et son MGS.

De même l'ensemble des concepts intermédiaires entre le concept b et le concept MGS est le suivant:

$$\{ \; b \; \textbf{ET} \; x, \; x \in \lambda(a)\}$$

$$= \{C9 \; \textbf{ET TELQUEUN}(r, \; C5) \; \textbf{ET} \; x, \; x \in \lambda(a)\}$$

$$= \{C9 \; \textbf{ET TELQUEUN}(r, \; C5), \; C9 \; \textbf{ET TELQUEUN}(r, \; C4 \; \textbf{ET} \; C5), \; C9 \; \textbf{ET}$$

$$\textbf{TELQUEUN}(r, \; C5) \; \textbf{ET TELQUEUN}(r, \; C4), \; C9 \; \textbf{ET TELQUEUN}(r, \; C5), \; C7 \; ET$$

$$C9 \; \textbf{ET TELQUEUN}(r, \; C5), \; C7 \; \textbf{ET} \; C9 \; \textbf{ET TELQUEUN}(r, \; C4 \; \textbf{ET} \; C5), \; C7 \; \textbf{ET} \; C9$$

$$\textbf{ET TELQUEUN}(r, \; C5) \; \textbf{ET TELQUEUN}(r, \; C4), \; C9 \; \textbf{ET} \; C7 \; \textbf{ET TELQUEUN}(r,$$

$$C5)\}$$

$$= \{b, \; c6, \; c5, \; b, \; c7, \; MGS, \; c8, \; c7\}$$

En supprimant les concepts équivalents au concept MGS et au concept b dans cet ensemble, on trouve quatre concepts intermédiaires entre le concept b et le concept MGS qui sont les suivants:

- Le concept c5 est l'ensemble des acteurs français ayant joué dans un film d'action et dans un film de comédie,
- le concept c6 est l'ensemble des acteurs français ayant joué dans des films d'action qui sont aussi des films de comédie,
- le concept c7 est l'ensemble des acteurs italiens qui sont aussi des acteurs français ayant joué dans un film d'action,
- et le concept c8 est l'ensemble des acteurs des acteurs italiens qui sont aussi des acteurs français ayant joué dans un film d'action et dans un film de comédie.

En variante, si l'ensemble de concepts auquel appartiennent les concepts a et b utilise une logique de description contenant le constructeur "OU", on utilise la même méthode que précédemment pour construire les concepts intermédiaires, mais en limitant la taille des concepts utilisés. En effet, dans une logique de description utilisant le constructeur "OU", l'ensemble des concepts généralisants d'un concept est potentiellement infini, car il contient tous les concepts de la forme:

"x OU y",

où

- x est le concept dont on calcule l'ensemble des concepts généralisants,

- et y est un autre concept de l'ensemble de concepts.

Il faut donc dans cette variante modifier les étapes M2 ou N2, suivant l'option du procédé selon l'invention choisie, pour ne prendre en considération dans l'ensemble des concepts généralisants calculé, que les concepts dont la taille est inférieure à une valeur prédéterminée. La taille d'un concept est définie par exemple comme le nombre de constructeurs "OU" apparaissant dans sa description plus la valeur un. La taille du concept "a OU b" vaut alors 2.

Enfin dans une étape E3 de la mesure de distance selon l'invention, on calcule une distance entre le concept a et le concept b. Ce calcul diffère suivant l'option choisie, c'est-à-dire l'utilisation du concept LCS ou du concept MGS, et suivant l'existence ou non d'une hiérarchie prédéfinie dans l'ensemble de concepts auquel appartiennent les concepts a et b.

La distance entre les deux concepts a et b est définie, dans la mesure de distance selon l'invention, comme la longueur d'une chaîne de concepts intermédiaires déterminés à l'étape E2, permettant d'aller du concept a au concept b en passant soit à travers leur concept subsumant le plus spécifique LCS soit à travers leur concept subsumé le plus général MGS. Les relations entre les concepts de cette chaîne sont des relations de subsomption, déterminées soit par la construction même de ces concepts, soit par une relation prédéfinie entre ces concepts si une hiérarchie prédéfinie existe dans l'ensemble de concepts. Autrement dit cette chaîne fait partie d'un treillis complet de concepts:

- les noeuds de ce treillis sont les concepts de base de l'ensemble de concepts et tous les concepts complexes possibles construits à partir de ces concepts de base,
- et les barres de ce treillis sont les relations de subsumption nées de la construction des concepts complexes du treillis, et les relations de subsomption prédéfinies si de telles relations préexistent dans l'ensemble de concepts.

Dans le cas où il n'existe pas de hiérarchie prédéfinie dans l'ensemble de concepts, la longueur d'une chaîne entre le concept a et le concept b en passant par le concept LCS est toujours la même, quelque soient les concepts intermédiaires par lesquels on passe. Cette longueur est aussi égale à celle d'une chaîne entre le concept a et le concept b en passant par le concept MGS.

Ainsi dans l'exemple de la **figure 4,** il y a deux chaînes de concepts permettant d'aller du concept a au concept b en passant par le concept LCS, les chaînes {a, c2, c1, LCS, b} et {a, c4, c3, LCS, b}, et deux chaînes de concepts permettant d'aller du concept a au concept b en passant par le concept MGS, les chaînes {a, MGS, c6, c5, b} et {a, MGS, c8, c7, b }. Ces quatre chaînes ont toutes la même longueur.

La distance entre le concept a et le concept b est alors calculée par l'une ou l'autre formule:

$$d(a,b) = n\_arc(a, LCS) + n\_arc(b, LCS)$$

ou

$$d'(a,b) = n\_arc(a, MGS) + n\_arc(b, MGS)$$

où

- $d(a,b)$ et $d'(a,b)$ désignent des distances entre deux concepts a et b,
- LCS désigne le concept subsumant le plus spécifique des concepts a et b,
- MGS désigne le concept subsumé le plus général des concepts a et b,
- $n\_arc(x, y))$ est le nombre de concepts sur une chaîne de concepts allant du concept x au concept y, incrémenté d'une unité, autrement dit $n\_arc(x, y))$ est le nombre d'arcs entre les concepts x et y dans le treillis complet de concepts décrit plus haut.

La distance calculée entre deux concepts en utilisant l'une ou l'autre de ces deux formules est identique.

Il est à noter que d'autres formules similaires sont également envisageables, par exemple en utilisant de manière plus générale une fonction affine croissante du nombre de concepts intermédiaires déterminés précédemment sur une chaîne de concepts entre les concepts a et b, passant soit par le concept LCS soit par le concept MGS.

De plus, si en variante l'ensemble de concepts auquel appartiennent les concepts a et b utilise le constructeur "OU", le treillis de concepts décrit plus haut n'est pas complet dans la mesure où on a limité le nombre de concepts intermédiaires à l'étape E2 de la mesure de distance selon l'invention. Cependant les mêmes formules de calcul de distance sont utilisables, la seule différence étant que la chaîne de concepts dont on mesure la longueur est en fait une chaîne d'un sous-ensemble fini de ce treillis complet.

Dans le cas où il existe une hiérarchie prédéfinie dans l'ensemble de concepts, les chaînes de concepts entre deux concepts passant par le concept subsumant le plus spécifique ou le concept subsumé le plus général de ces deux concepts ne sont pas forcément de la même longueur. En effet une relation de subsomption préexistante peut court-circuiter des concepts intermédiaires déterminés à l'étape E2 de la mesure de distance selon l'invention. Dans ce cas, la distance entre les concepts a et b est calculée par l'une ou l'autre formule:

$$d(a,b) = \min(n\_arc(a, LCS)) + \min(n\_arc(b, LCS))$$

ou

$$d'(a,b) = \min(n\_arc(a, MGS)) + \min(n\_arc(b, MGS))$$

où

- d(a,b) et d'(a,b) désignent des distances entre deux concepts a et b,
- LCS désigne le concept subsumant le plus spécifique des concepts a et b,
- MGS désigne le concept subsumé le plus général des concepts a et b,
- min(n_arc(x, y))) est le nombre d'arcs entre les concepts x et y sur la plus courte chaîne de concepts entre ces deux concepts x et y, dans le treillis complet de concepts décrit plus haut, qui tient compte des relations préexistantes de la hiérarchie prédéfinie.

Ces deux formules donnant des résultats qui ne sont pas forcément identiques, une application utilisant le procédé selon l'invention sur un ensemble de concepts ayant une hiérarchie prédéfinie devra toujours utiliser une seule de ces deux formules.

En variante, si la taxonomie à laquelle appartiennent les concepts a et b utilise le constructeur "OU", cette plus courte chaîne fait partie d'un sous-ensemble fini du treillis complet de concepts décrit plus haut, tenant compte des relations préexistantes de la hiérarchie prédéfinie.

Comme dans le cas précédent, d'autres formules similaires sont envisageables, par exemple utilisant une fonction affine croissante du nombre de concepts intermédiaires déterminés précédemment sur la plus courte chaîne de concepts entre les concepts a et b, passant soit par le concept LCS soit par le concept MGS.

De plus, il est à noter que dans cette étape E3, le calcul de la distance entre les concepts a et b en utilisant le concept MGS est l'option la plus intéressante lorsque l'ensemble de concepts utilise le langage "ALE". En effet le calcul de la distance entre les concepts a et b est alors beaucoup plus rapide en utilisant le concept MGS qu'en utilisant le concept LCS. Ceci est dû au fait que le calcul du concept subsumant le plus spécifique de deux concepts a et b dans le langage "ALE" est très complexe et demande un temps de calcul proportionnel à

$$2^{n_a + n_b}$$

où

- $n_a$ est le nombre de constructeurs dans la description du concept a,
- et $n_b$ est le nombre de constructeurs dans la description du concept b, alors que le calcul du concept subsumé le plus général des concepts a et b se fait en une opération.

La distance ainsi calculée à l'étape E3 est une distance sémantique qui prend une signification dans les applications comparant entre elles des distances entre concepts.

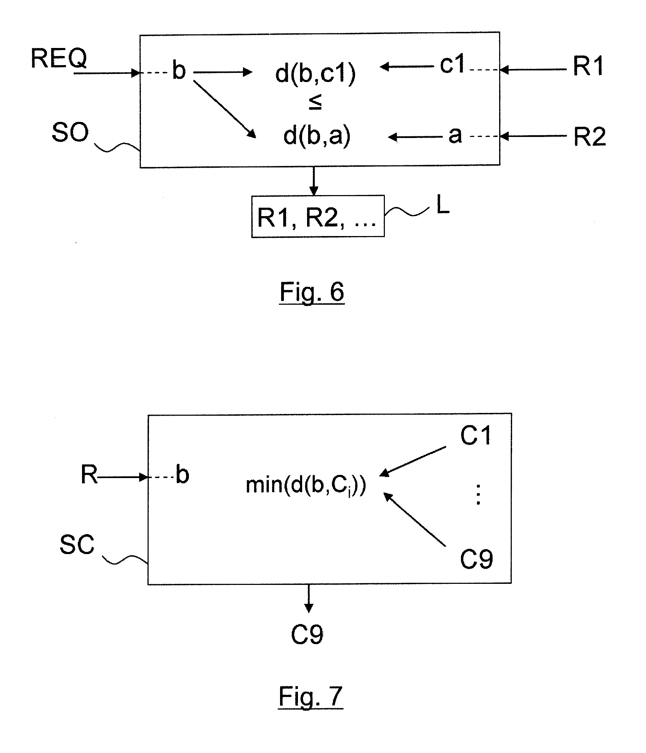

Ainsi dans le cadre d'une application d'ordonnancement implémentée dans un serveur SO représenté à la **figure 6,** utilisant la mesure de distance selon l'invention, les ressources correspondant aux concepts les plus proches sémantiquement d'une requête REQ d'un utilisateur sont retournées en priorité à cet utilisateur. Par exemple si la requête utilisateur REQ est de rechercher un acteur français ayant joué dans un film d'action, ce qui correspond au concept b de la **figure 4**, la ressource R1 correspondant au concept c1 est mieux classée que la ressource R2 correspondant au concept a dans la liste L retournée à l'utilisateur. En effet la distance d(b,a) entre le concept a et le concept b calculée selon l'étape E3 est de 4, alors que la distance d(b,c1) entre le concept c1 et le concept b calculée selon l'étape E3 est de 2. Ceci signifie que l'utilisateur a plus de chance de trouver des ressources correspondant à sa requête dans l'ensemble des acteurs italiens ayant joué dans des films d'action, que dans l'ensemble des acteurs italiens ayant joué dans des films d'action qui sont aussi des films de comédie, ce qui paraît intuitivement exact.

De même, dans une application de classification implémentée dans un serveur SC représenté à la **figure 7**, utilisant la mesure de distance selon l'invention, une ressource R sera classée dans une classe de concepts d'une taxonomie existante suivant sa proximité sémantique avec les classes de cette taxonomie. Par exemple si la ressource R correspond par sa description au concept b, et si la taxonomie comprend neuf classes correspondant aux concepts C1 à C9, l'application de classification calcule la distance minimale min(d(b, $C_i$)) entre la ressource R et les classes C1 à C9. La distance minimale correspondant à la classe C9, le concept b sera classé dans la classe C9 regroupant les acteurs français.

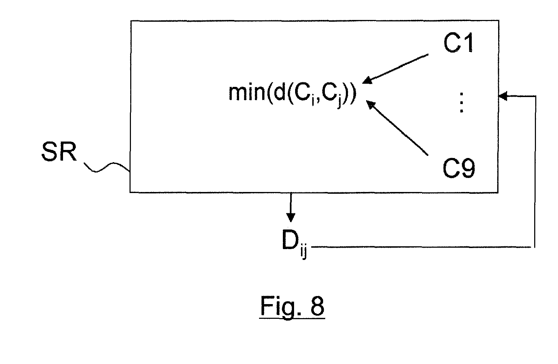

Enfin, dans une application de regroupement implémentée dans un serveur SR représenté à la **figure 8**, utilisant la mesure de distance selon l'invention, des ressources assimilables à des concepts sont regroupées dans des concepts de plus haut niveaux, suivant un arbre hiérarchique. Par exemple si les ressources à regrouper correspondent aux concepts C1 à C9, l'application calcule la matrice des distances d($C_i$,$C_j$) entre chaque couple de concepts. Puis les concepts entre lesquels la distance est minimale sont regroupés deux à deux dans un niveau supérieur de concepts $D_{ij}$. Les distances entre les nouveaux concepts $D_{ij}$ sont ensuite calculées, puis les concepts $D_{ij}$ sont regroupés de manière similaire dans un niveau supérieur de concepts, et ainsi de suite, jusqu'à la création d'un concept racine subsumant tous les concepts C1 à C9.

## Revendications

1. Procédé d'ordonnancement de ressources d'une base de ressources par rapport à une requête utilisateur (REQ), lesdites ressources étant regroupées en concepts d'un ensemble de concepts utilisant un langage expressif tel qu'une logique de description, et ladite requête (REQ) correspondant à un concept (b) dudit ensemble, ledit procédé utilisant une mesure de distance entre deux concepts, l'un desdits deux concepts (c1) correspondant à l'une desdites ressources (R1) et l'autre desdits deux concepts (b) correspondant à ladite requête, ladite mesure de distance comportant une étape de détermination (E1) du concept subsumant le plus spécifique (LCS) desdits deux concepts (b,c1), ou du concept subsumé le plus général (MGS) desdits deux concepts (b,c1),
   **caractérisé en ce que** ladite mesure de distance comporte en outre une étape de détermination (E2) de concepts intermédiaires entre lesdits deux concepts (b,c1) et ledit concept subsumant le plus spécifique (LCS), ou entre lesdits deux concepts (b,c1) et ledit concept subsumé le plus général (MGS), à partir de constructeurs logiques dudit langage expressif.

2. Procédé d'ordonnancement de ressources d'une base de ressources selon la revendication 1, dans lequel ledit ensemble de concepts ne comporte pas de hiérarchie prédéfinie entre concepts, ledit procédé étant **caractérisé en ce que** ladite mesure de distance comporte une étape supplémentaire de calcul (E3) d'une distance entre lesdits deux concepts (b,c1) par l'une ou l'autre formule:

$$d(b,c1)=n\_arc(b, LCS) + n\_arc(c1, LCS)$$

ou

$$d'(b,c1)=n\_arc(b, MGS) + n\_arc(c1, MGS)$$

où

- d(b,c1 et d'(b,c1) désignent des distances entre deux concepts b et c1,
- LCS désigne le concept subsumant le plus spécifique des concepts b et c1,
- MGS désigne le concept subsumé le plus général des concepts b et c1,
- n_arc(x, y)) est une fonction affine croissante du nombre de concepts intermédiaires déterminés précédemment sur une chaîne de concepts entre deux concepts x et y, les relations entre les concepts de ladite chaîne étant des relations de subsomption.

**3.** Procédé d'ordonnancement de ressources d'une base de ressources selon la revendication 1, dans lequel ledit ensemble de concepts comporte une hiérarchie prédéfinie de concepts, ledit procédé étant **caractérisé en ce que** ladite mesure de distance comporte une étape supplémentaire de calcul (E3) d'une distance entre lesdits deux concepts (b,c1) par l'une ou l'autre formule:

$$d(b,c1)=min(n\_arc(b, LCS))+min(n\_arc(c1, LCS))$$

ou

$$d'(b,c1)= min(n\_arc(b, MGS)) + min(n\_arc(c1, MGS))$$

où

- d(b,c1) et d'(b,c1) désignent des distances entre deux concepts b et c1,
- LCS désigne le concept subsumant le plus spécifique des concepts b et c1,
- MGS désigne le concept subsumé le plus général des concepts b et c1,
- min(n\_arc(x, y))) est une fonction affine croissante du nombre de concepts intermédiaires déterminés précédemment sur la plus courte chaîne de concepts entre deux concepts x et y, ladite chaîne faisant partie d'un treillis de concepts dont les barres lient entre eux des concepts par des relations de subsomption.

**4.** Procédé d'ordonnancement de ressources d'une base de ressources selon l'une quelconque des revendications 1 à 3, dans lequel l'étape de détermination (E2) de concepts intermédiaires entre lesdits deux concepts (b,c1) et ledit concept subsumant le plus spécifique (LCS) comprend les étapes de:

- calcul (M2) des concepts généralisants d'un desdits deux concepts
- et calcul (M3) des conjonctions desdits concepts généralisants avec ledit concept subsumant le plus spécifique (LCS).

**5.** Procédé d'ordonnancement de ressources d'une base de ressources selon l'une quelconque des revendications 1 à 3, dans lequel l'étape de détermination (E2) de concepts intermédiaires entre lesdits deux concepts (b,c1) et ledit concept subsumé le plus général (MGS) comprend les étapes de:

- calcul (N2) des concepts généralisants d'un desdits deux concepts (b,c1)
- et calcul (N3) des conjonctions desdits concepts généralisants avec l'autre desdits deux concepts (c1, b).

**6.** Moteur de recherche comportant une base de ressources, lesdites ressources étant regroupées en concepts d'un ensemble de concepts utilisant un langage expressif tel qu'une logique de description, ledit moteur étant adapté pour interroger ladite base de ressources à partir d'une requête utilisateur (REQ) correspondant à un concept (b) dudit ensemble, ledit moteur comportant des moyens de mesure de distance entre deux concepts, lesdits moyens de mesure comportant des moyens de détermination (E1) du concept subsumant le plus spécifique (LCS) desdits deux concepts, ou du concept subsumé le plus général (MGS) desdits deux concepts, **caractérisé en ce que** lesdits moyens de mesure comportent en outre des moyens de détermination (E2) de concepts intermédiaires entre lesdits deux concepts et ledit concept subsumant le plus spécifique (LCS), ou entre lesdits deux concepts et ledit concept subsumé le plus général (MGS), à partir de constructeurs logiques dudit langage expressif.

**7.** Système d'ordonnancement de ressources d'une base de ressources par rapport à une requête utilisateur (REQ), lesdites ressources étant regroupées en concepts d'un ensemble de concepts utilisant un langage expressif tel qu'une logique de description, et ladite requête correspondant à un concept dudit ensemble, ledit système comportant des moyens de mesure de distance entre deux concepts, lesdits moyens de mesure comportant des moyens de détermination (E1) du concept subsumant le plus spécifique (LCS) desdits deux concepts, ou du concept subsumé le plus général (MGS) desdits deux concepts,
**caractérisé en ce que** lesdits moyens de mesure comportent en outre des moyens de détermination (E2) de concepts intermédiaires entre lesdits deux concepts et ledit concept subsumant le plus spécifique (LCS), ou entre lesdits deux concepts et ledit concept subsumé le plus général (MGS), à partir de constructeurs logiques dudit langage expressif.

8. Programme d'ordinateur comportant des instructions pour mettre en oeuvre le procédé selon l'une quelconque des revendications 1 à 5, lorsqu'il est exécuté sur un ordinateur.

Fig. 1

a , b

Détermination du concept LCS
ou du concept MGS

E1

LCS , MGS

Détermination des concepts
intermédiaires

E2

Calcul d'une distance

E3

Fig. 2

$$\mu = \varnothing$$ M1

Calcul de $\lambda(a)$ M2

$$\mu = \mu \cup \{ c \sqcap LCS, c \in \lambda(a) \}$$ M3

$$\forall\ c' \neq c'' \in \mu,\ c' \Leftrightarrow c'' \Rightarrow\ \mu = \mu \backslash \{c'\}$$ M4

<u>Fig.3</u>

EP 1 914 644 A1

c1

Acteur_Européen ET TELQUEUN (*acteur_de*, Film_Action)   LCS

Acteur_Italien ET TELQUEUN (*acteur_de*, Film_Action)

Acteur_Européen ET TELQUEUN (*acteur_de*, Film_Action) ET TELQUEUN (*acteur_de*, Film_Comédie)

Acteur_Italien ET TELQUEUN (*acteur_de*, Film_Action) ET TELQUEUN (*acteur_de*, Film_Comédie)

Acteur_Européen ET TELQUEUN (*acteur_de*, Film_Action ET Film_Comédie)   c3

c2

Acteur_Italien ET TELQUEUN(*acteur_de*, (Film_Action ET Film_Comédie) )   a   b   Acteur_Français ET TELQUEUN (*acteur_de*, Film_Action)   c4

c5   Acteur_Français ET TELQUEUN (*acteur_de*, Film_Action) ET TELQUEUN (*acteur_de*, Film_Comédie)   Acteur_Italien ET Acteur_Français ET TELQUEUN (*acteur_de*, Film_Action)

Acteur_Français ET TELQUEUN(*acteur_de*, (Film_Action ET Film_Comédie) )   c7

c6   Acteur_Italien ET Acteur_Français ET TELQUEUN (*acteur_de*, Film_Action) ET TELQUEUN (*acteur_de*, Film_Comédie)

Acteur_Italien ET TELQUEUN(*acteur_de*, (Film_Action ET Film_Comédie) ) ET Acteur_Français ET TELQUEUN (*acteur_de*, Film_Action)   MGS   c8

Fig. 4

$$\eta = \varnothing \qquad \sim\!\text{N1}$$

$$\text{Calcul de } \lambda(b) \qquad \sim\!\text{N2}$$

$$\eta = \eta \cup \{ a \sqcap d, d \in \lambda(b)\} \qquad \sim\!\text{N3}$$

$$\forall\, d' \neq d'' \in \eta,\ d' \Leftrightarrow d'' \Rightarrow \eta = \eta \setminus\{d'\} \qquad \sim\!\text{N4}$$

Fig.5

REQ ⟶ ┈ b ⟶ d(b,c1) ⟵ c1 ┈⟵ R1
             ≤
SO ⟿      d(b,a) ⟵ a ┈⟵ R2

R1, R2, ... ⟿ L

Fig. 6

R ⟶ ┈ b        C1
        min(d(b,C_i)) ⟵ ⋮
                        C9

SC ⟿

C9

Fig. 7

$$\text{SR} \quad \quad \min(d(C_i,C_j)) \quad \begin{matrix} C1 \\ \vdots \\ C9 \end{matrix}$$

$$D_{ij}$$

Fig. 8

| Office européen<br>des brevets | **RAPPORT DE RECHERCHE EUROPEENNE** | Numéro de la demande<br>EP 07 11 8717 |
|---|---|---|

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE    (IPC) |
|---|---|---|---|
| X | BOUALEM BENATALLAH ET AL:  "On automating Web services discovery"<br>THE VLDB JOURNAL ; THE INTERNATIONAL JOURNAL ON VERY LARGE DATA BASES, SPRINGER-VERLAG, BE,<br>vol. 14, no. 1, 1 mars 2005 (2005-03-01), pages 84-96, XP019351971<br>ISSN: 0949-877X<br>section "2.1 Basic Definitions"<br>section "2.2 The difference operation"<br>----- | 1-8 | INV.<br>G06F17/30 |
| X | DUC, THANH, ROUSSET:  "A Compact Representation for Least Common Subsumers in the Description Logic ALE"<br>AI COMMUNICATIONS,<br>vol. 19, no. 3, août 2006 (2006-08), pages 239-273, XP008081720<br>Amsterdam<br>section "1. Introduction"<br>----- | 1-8 | |
| X | RALF KÜSTERS ET AL:  "Structural Subsumption and Least Common Subsumers in a Description Logic with Existential and Number Restrictions"<br>STUDIA LOGICA, KLUWER ACADEMIC PUBLISHERS, DO,<br>vol. 81, no. 2,<br>1 novembre 2005 (2005-11-01), pages 227-259, XP019267824<br>ISSN: 1572-8730<br>* abrégé *<br>-----<br><br>-/-- | 1-8 | **DOMAINES TECHNIQUES RECHERCHES  (IPC)**<br><br>G06F |

Le présent rapport a été établi pour toutes les revendications

| Lieu de la recherche | Date d'achèvement de la recherche | Examinateur |
|---|---|---|
| Berlin | 6 février 2008 | Schmidt, Axel |

CATEGORIE DES DOCUMENTS CITES

X : particulièrement pertinent à lui seul
Y : particulièrement pertinent en combinaison  avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 07 11 8717

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | RALF SCHENKEL ET AL: "Semantic Similarity Search on Semistructured Data with the XXL Search Engine" INFORMATION RETRIEVAL, KLUWER ACADEMIC PUBLISHERS, BO, vol. 8, no. 4, 1 décembre 2005 (2005-12-01), pages 521-545, XP019207483 ISSN: 1573-7659 ----- | 1-8 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Berlin | 6 février 2008 | Schmidt, Axel |

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Z. WU ; M. PALMER.** Verb Semantics and Lexical Selection. *Associations for Computational Linguistics,* 1994
- **P. RESNIK.** Using information content to evaluate semantic similarity in a taxonomy. *International Joint Conference for Artificial Intelligence,* 1995
- **A. TVERSKY.** Features of similarity. *Psychological Review,* 1977
- **C. D'AMATO ; N. FANIZZI ; F. ESPOSITO.** A Semantic Similarity Measure for Expressive Description Logics. *Convegno Italiano di Logica Computazionale,* 2005
- **D. NARDI ; R. J. BRACHMAN.** The Description Logic Handbook. Cambridge University Press
- **F. BAADER ; B. SERTKAYA ; A.Y.TURHAN.** Computing the Least Common Subsumer w.r.t. a Background Terminology. *Description Logics,* 2004